# NEUE EUROPÄISCHE PATENTSCHRIFT

(11) **EP 2 063 336 B2**
(45) Veröffentlichungstag und Bekanntmachung des Hinweises auf die Entscheidung über den Einspruch: **22.06.2022**
(45) Hinweis auf die Patenterteilung: 10.02.2016
(21) Anmeldenummer: 08019788.2
(22) Anmeldetag: 12.11.2008
(51) Int. Cl.: G05B 19/4067, E06B 9/88, E06B 9/68

(54) **Antriebsanordnung für eine Verdunkelungsvorrichtung**
Drive assembly for a screening device
Dispositif d'entraînement pour un dispositif d'obscurcissement

(30) Priorität: 13.11.2007 DE 202007015933 U; 20.11.2007 DE 202007016283 U
(43) Veröffentlichungstag der Anmeldung: 27.05.2009
(73) Patentinhaber: ARCA Beteiligungen GmbH, 46414 Rhede (DE)
(72) Erfinder: Tepasse, Johannes, Dipl.-Ing., 46414 Rhede (DE); Kern, Ralf, Dipl.-Ing., 46399 Bocholt (DE)
(74) Vertreter: Gottschald, Jan

(56) Entgegenhaltungen:
- EP-A- 0 965 724
- EP-A- 1 752 606
- DE-A1- 4 311 267
- FR-A- 2 869 349
- US-A- 5 850 131
- US-A1- 2005 173 080
- US-A1- 2007 039 243

## Beschreibung

Die Erfindung betrifft eine Antriebsanordnung für eine Verdunkelungsvorrichtung bzw. Sicherungsvorrichtung gemäß dem Oberbegriff von Anspruch 1.

Die in Rede stehende Antriebsanordnung läßt sich für eine Vielzahl von Verdunkelungsvorrichtungen bzw. Sicherungsvorrichtungen einsetzen. Wesentlich ist lediglich, daß die Verdunkelungsvorrichtung bzw. Sicherungsvorrichtung ein verstellbares Verschlußelement aufweist. Beispiele für ein solches verstellbares Verschlußelement sind Rolläden, Jalousien, Fensterläden, Markisen, Rolltore oder Rollvorhänge.

Eine bekannte, nach Art eines Rohrmotors ausgestaltete Antriebsanordnung (EP 0 552 459 A1) dient in erster Linie der motorischen Verstellung eines Rolladens. Hierfür ist die Antriebsanordnung mit einem Antriebsmotor und einem dem Antriebsmotor nachgeschalteten Getriebe ausgestattet. Dem Antriebsmotor ist eine Antriebssteuerung mit einer Wegmeßanordnung zur Ermittlung der aktuellen Position des Rolladens zugeordnet. Mit "Ermittlung der aktuellen Position" ist vorliegend gemeint, daß ein Wert als Maß für die aktuelle Position ermittelt wird, der mit einem gespeicherten Positions-Sollwert verglichen werden kann.

Bei der bekannten Antriebsanordnung erfolgt die Wegmessung hinsichtlich der Meßgenauigkeit in zwei logischen Ebenen. Zur Ermittlung der Grobposition des Rolladens ist der Wickelwelle des Rolladens ein erstes inkrementelles Sensorelement zugeordnet. Das Sensorelement ist als Reed-Sensor ausgestaltet, dem in einem mit der Wickelwelle verbundenen Ring angeordnete Magnete zugeordnet sind. Die Magnete sind in relativ weiten Abständen über den Umfang des Rings verteilt, so daß mit diesem Sensorelement nur die ungefähre Position - Grobposition - des Rolladens ermittelt werden kann.

Um außerdem die Feinposition des Rolladens ermitteln zu können, ist bei der bekannten Antriebsanordnung ein zweites Sensorelement vorgesehen, das der Motorwelle des Antriebsmotors zugeordnet ist.

Vorteilhaft bei der bekannten Antriebsanordnung ist die Tatsache, daß trotz einfach aufgebauter Sensorelemente - inkrementelle Sensoren - eine vergleichsweise hohe Genauigkeit erreichbar ist. Dies liegt insbesondere daran, daß die Sensorimpulse des ersten Sensorelements gewissermaßen als periodische Referenzimpulse zu verstehen sind. Alle Meßungenauigkeiten werden bei Auftreten eines Referenzimpulses beseitigt.

Nachteilig bei der bekannten Antriebsanordnung ist allerdings die Tatsache, daß zur Ermittlung der Position des Rolladens stets an zwei getrennten Stellen angeordnete Sensoren erforderlich sind. Dies führt zu einem hohen Montage- und Verkabelungsaufwand und damit zu hohen Fertigungskosten.

Zwar sind auch sogenannte "Multi-Turn-Drehgeber" bekannt, deren Meßbereich entsprechend eine Mehrzahl von Umdrehungen umfaßt. Diese sind jedoch einerseits teuer und andererseits verglichen mit der obigen Wegmeßanordnung oftmals nicht hinreichend genau.

Es sind auch Antriebsanordnungen bekannt, die ausschließlich mit einem inkrementellen Sensor an der Motorwelle arbeiten, dessen Sensorimpulse jeweils das schrittweise Hochzählen eines Zählers auslösen. Aufgrund des über die motorische Verstellung ständig anwachsenden Meßfehlers ist die erzielbare Genauigkeit im Ergebnis aber nicht hinreichend.

Weiter sind Antriebsanordnungen für Rolladen o. dgl. bekannt (EP 0 544 133 B1), bei denen die zeitlichen Abstände der Impulse eines der Motorwelle oder einer der Motorwelle nachgeschalteten Welle zugeordneten inkrementellen Sensors dafür genutzt werden, einen Überlastfall zu erfassen. Die Realisierung der Ermittlung der Position des Rolladens wird in dieser Veröffentlichung nicht angesprochen.

Es darf darauf hingewiesen werden, daß die in Rede stehende Antriebsanordnung auch als Gurtwickler für eine Verdunkelungsvorrichtung wie einen Rolladen ausgestaltet sein kann. Der grundsätzliche Aufbau eines solchen Gurtwicklers ist in der DE 299 21 653 U1 gezeigt.

Die bekannte Antriebsanordnung (WO 03/078784 A1), von der die Erfindung ausgeht, ist einem Rolltor oder dgl. zugeordnet. Zur Ermittlung der Grobposition des Rolltores zählt die Wegmeßanordnung zunächst die an einer Sensoreinrichtung vorbeifahrenden Strukturelemente. Zur Ermittlung der Feinposition des Rolltores ist ferner eine Zeitmeßeinrichtung vorgesehen, die die Zeit nach dem Vorbeifahren des letzten Strukturelements mißt. Ähnliches zeigt die FR 2 869 349 A1 für eine Antriebsanordnung eines Rolladens.

Nachteilig bei der bekannten Antriebsanordnung ist die Tatsache, daß das Wiederanfahren nach dem Abschalten des Antriebsmotors oder nach einem Stromausfall Probleme bereiten kann, insbesondere wenn das Verschlußelement geringfügig absackt. Ein solches Absacken läßt sich mit der bekannten Antriebsanordnung nämlich nicht erfassen.

Der Erfindung liegt das Problem zugrunde, die bekannte Antriebsanordnung so auszugestalten und weiterzubilden, daß eine hohe Betriebssicherheit insbesondere nach dem Abschalten des Antriebsmotors oder nach einem Stromausfall gegeben ist.

Das obige Problem wird bei einer Antriebsanordnung gemäß Anspruch 1 durch die Merkmale des kennzeichnenden Teils von Anspruch 1 gelöst.

Wesentlich ist zunächst die Idee, die Genauigkeit einer inkrementell arbeitenden, Zählereignisse für einen Zähler erzeugenden Sensoreinrichtung dadurch zu erhöhen, daß der aktuelle Zeitabstand zu dem vorzugsweise letzten Zählereignis gemessen wird. Damit stellt der aktuelle Zählerstand des Zählers zusammen mit dem aktuellen Zeitabstand ein Maß für die aktuelle Position des Verschlußelements bereit. Die Angabe der Position des Verschlußelements erfolgt also gewissermaßen in den Koordinaten "Zählerstand" und "Zeitabstand".

Zwar handelt es sich bei der Ermittlung der Feinposition mittels Zeitmessung nur um eine Schätzung der Feinposition bei unterstellter konstanter Verstellgeschwindigkeit. Angesichts der Tatsache, daß die mit der Zeitmessung zu überbrückenden Verstellbereiche vergleichsweise klein sind, ist die absolute Genauigkeit im Ergebnis hoch.

Weiter ist es vorschlagsgemäß vorgesehen, daß die Antriebssteuerung einen Zwischenspeicher aufweist und stets bzw. zyklisch den jeweils aktuellen Zählerstand und gegebenenfalls den aktuellen Zeitabstand speichert und daß der Zwischenspeicher zusätzlich das aktuelle Sensorsignal bzw. die aktuellen Sensorsignale der Sensoreinrichtung speichert. Mit der zusätzlichen Speicherung des aktuellen Sensorsignals bzw. der aktuellen Sensorsignale läßt sich leicht erfassen, ob im abgeschalteten Zustand eine Verstellung des Verschlußelements erfolgt ist und ob gegebenenfalls eine Korrektur des Zählerstands erforderlich ist.

Mit der bevorzugten Ausgestaltung gemäß Anspruch 2 ist eine besonders einfache Signalauswertung möglich, da ein Impuls der impulsartigen Sensorsignale stets eine ansteigende Flanke sowie eine absteigende Flanke aufweist, die steuerungstechnisch leicht erfaßbar sind. Besonders vorteilhaft ist in diesem Zusammenhang ein rechteckförmiger Verlauf der Sensorimpulse.

Bei der besonders bevorzugten Ausgestaltung gemäß Anspruch 7 ist es grundsätzlich möglich, allein auf der Basis der Sensorsignale nicht nur die Position, sondern auch die Verstellrichtung des Verschlußelements zu bestimmen.

Bei bevorzugen Ausgestaltungen ist eine Ausgestaltung der Antriebsanordnung als Rohrmotor vorgesehen. Die hohe Kompaktheit der vorschlagsgemäßen Wegmeßanordnung ist für einen solchen Rohrmotor besonders vorteilhaft anwendbar.

Bei einer weiteren bevorzugten Ausgestaltung gemäß ist eine Ausgestaltung der Antriebsanordnung als Gurtwickler für eine Verdunkelungsvorrichtung wie einen Rolladen vorgesehen. Auch hier ist die hohe Kompaktheit der vorschlagsgemäßen Wegmeßanordnung besonders vorteilhaft.

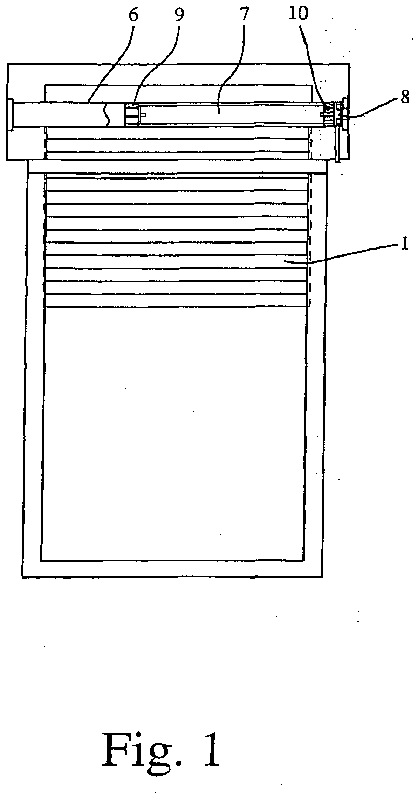

Weitere Einzelheiten, Merkmale und Ziele der vorliegenden Erfindung werden nachfolgend anhand einer Zeichnung bevorzugter Ausführungsbeispiele näher erläutert. In der Zeichnung zeigt
- Fig. 1: eine Verdunkelungsvorrichtung mit einer vorschlagsgemäßen Antriebsanordnung,
- Fig. 2: eine vorschlagsgemäße Antriebsanordnung im nicht eingebauten Zustand,
- Fig. 3: ausgewählte Komponenten der Antriebsanordnung gemäß Fig. 2 im demontierten Zustand,
- Fig. 4: in einer schematischen Ansicht eine Sensoreinrichtung einer vorschlagsgemäßen Antriebsanordnung,
- Fig. 5: eine beispielhafte Darstellung der Funktionsweise des Positionszählers einer vorschlagsgemäßen Wegmeßeinrichtung beim Aufwärtslauf,
- Fig. 6: eine beispielhafte Darstellung der Funktionsweise des Positionszählers einer vorschlagsgemäßen Wegmeßeinrichtung beim Abwärtslauf und
- Fig. 7: eine beispielhafte Darstellung der Funktionsweise der Zeitmeßeinrichtung einer vorschlagsgemäßen Wegmeßeinrichtung beim Aufwärtslauf.

Die vorschlagsgemäße Lösung ist in der Zeichnung anhand einer Verdunkelungsvorrichtung mit einem als Rolladen ausgestalteten verstellbaren Verschlußelement 1 gezeigt. Grundsätzlich ist die vorschlagsgemäße Antriebsanordnung für viele Varianten von Verdunkelungsvorrichtungen bzw. Sicherungsvorrichtungen anwendbar. Eine beispielhafte Auswahl wurde im einleitenden Teil der Beschreibung gegeben.

Die Antriebsanordnung weist einen Antriebsmotor 2 und ein dem Antriebsmotor 2 nachgeschaltetes Getriebe 3 zur motorischen Verstellung des Verschlußelements 1 auf. Gegebenenfalls kann auf ein nachgeschaltetes Getriebe 3 auch verzichtet werden.

Dem Antriebsmotor 2 ist eine Antriebssteuerung 4 zugeordnet, wobei die Antriebssteuerung 4 eine Wegmeßanordnung zur Ermittlung der Position des Verschlußelements 1 aufweist.

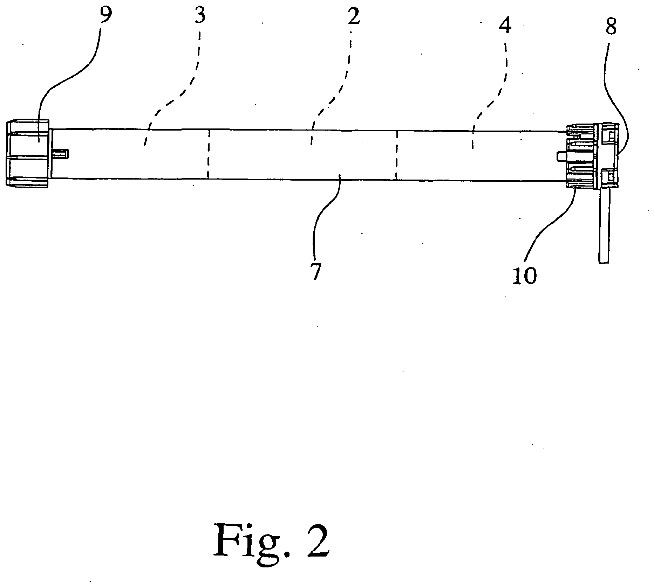

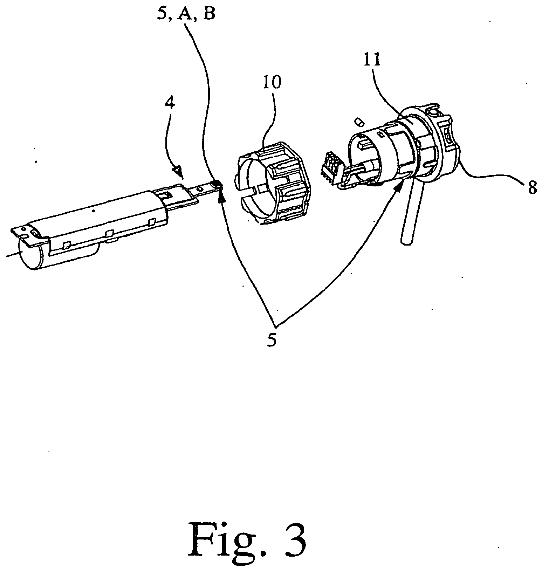

Fig. 2 zeigt die Lage der Komponenten Antriebsmotor 2, Getriebe 3 und Antriebssteuerung 4 schematisch. Fig. 3 zeigt die Einbaulage der Antriebssteuerung 4 im Rahmen einer Explosionsdarstellung. Der konstruktive Aufbau der dargestellten Antriebsanordnung wird weiter unten näher erläutert.

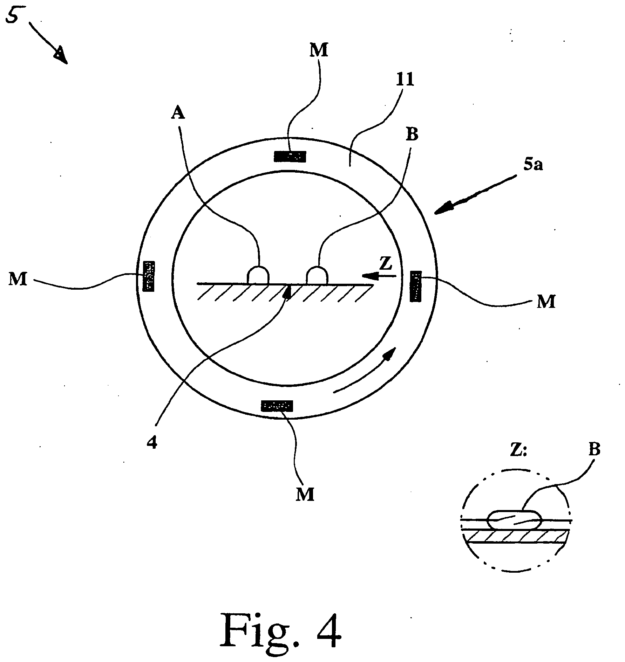

Die Wegmeßanordnung ist zur Ermittlung der Grobposition des Verschlußelements 1 mit einer Sensoreinrichtung 5 und einem Positionszähler ausgestattet. Eine solche Sensoreinrichtung 5 ist schematisch in Fig. 4 dargestellt.

Die Sensoreinrichtung 5 besteht aus mindestens einem Sensorelement, hier und vorzugsweise aus zwei Sensorelementen A, B. Bei einer Verstellung des Verschlußelements 1 erzeugt die Sensoreinrichtung 5 periodische Sensorsignale, die Zählerereignisse für den Positionszähler bereitstellen und beim Auftreten eines Zählerereignisses im Positionszähler je nach Verstellrichtung ein Hoch- bzw. Herunterzählen um einen Zählschritt bewirken. Der Zählerstand stellt entsprechend ein Maß für die Grobposition bereit.

Die Meßgenauigkeit bei einer Wegmessung mit Positionszähler ist begrenzt. Dies liegt daran, daß Positionen in den Verstellbereichen, die zwischen zwei Zählereignissen liegen, nicht aufgelöst werden können.

Um dennoch eine hohe Meßgenauigkeit zu erreichen, weist die Wegmeßanordnung zusätzlich eine Zeitmeßeinrichtung auf, mit der, ausgelöst durch ein Zählereignis, der aktuelle zeitliche Abstand - Zeitabstand - zu eben diesem Zählereignis meßbar ist. Dabei wird zunächst unterstellt, daß die Verstellgeschwindigkeit des Verschlußelements 1 im wesentlichen konstant ist, so daß der Zeitabstand zusammen mit dem Zählerstand insgesamt ein genaues Maß für den Verstellweg des Verschlußelements 1 bereitstellt.

Die Zählereignisse wiederholen sich entsprechend zu den Sensorsignalen vorzugsweise periodisch. Grundsätzlich ist es aber auch denkbar, daß die Zählereignisse so definiert sind, daß ein Zählereignis nur einfach oder zweifach bei einem kompletten Verstellvorgang auftritt. Ein Anwendungsfall hierzu wird weiter unten erläutert.

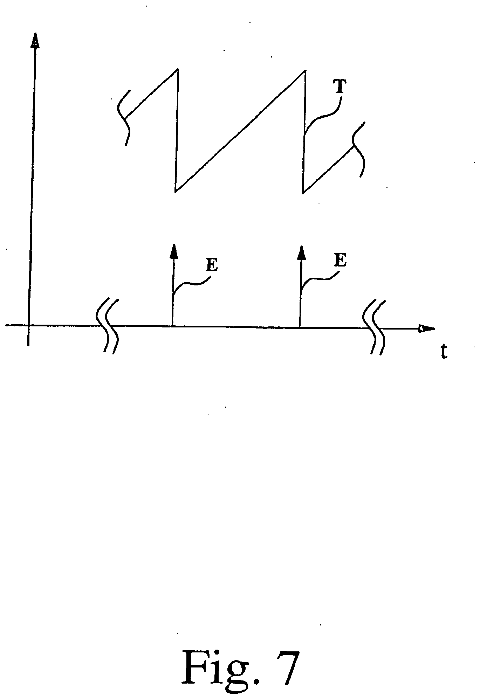

Das Prinzip der Messung des Zeitabstands zeigt Fig. 7 beispielhaft anhand zweier Zählereignisse E. Kurz vor dem Auftreten des ersten dargestellten Zählereig-nisses E läuft bereits eine Messung des Zeitabstands T, die mit dem Auftreten des Zählereignisses E zurückgesetzt wird und neu anläuft. Dieser Vorgang wiederholt sich beim Auftreten des zweiten Zählereignisses E und vorzugsweise bei allen nachfolgenden Zählereignissen. Die Darstellung in Fig. 7 veranschaulicht, daß der jeweils aktuelle Zeitabstand bei unterstellter konstanter Verstellgeschwindigkeit ein Maß für den Verstellweg darstellt, den das Verschlußelement 1 seit dem letzten Zählereignis E zurückgelegt hat.

Mit der zusätzlichen Messung des Zeitabstands lassen sich also die Positionen auflösen, die mit dem Positionszähler allein nicht auflösbar sind. Da eine solche Meßgenauigkeit in der Regel nicht im gesamten Verstellbereich benötigt wird, kann auch vorgesehen sein, daß diese zusätzliche Messung des Zeitabstands nur in vorbestimmten Verstellbereichen erfolgt, wie noch erläutert wird.

Für die Realisierung der Zeitmeßeinrichtung sind zahlreiche vorteilhafte Varianten denkbar. Eine bevorzugte Variante besteht darin, daß die Zeitmeßeinrichtung einen Zähler aufweist, der von einem Taktgeber mit einem Zähltakt beaufschlagt wird und der bei vorzugsweise jedem Zählereignis zurückgesetzt wird und den Zählvorgang neu startet.

Grundsätzlich ist es ausreichend, daß die Sensoreinrichtung 5 mit nur einem Sensorelement ausgestattet ist, um die die Zählereignisse bereitstellenden Sensorsignale erzeugen zu können. Insbesondere vor dem Hintergrund, daß mit mehreren Sensorelementen auch die Verstellrichtung des Verschlußelements 1 ermittelt werden kann, ist es vorteilhaft, mindestens zwei, vorzugsweise genau zwei Sensorelemente A, B, vorzusehen. Dies zeigt Fig. 4 beispielhaft.

In besonders vorteilhafter Ausgestaltung ist das - mindestens eine - Sensorelement A, B so ausgelegt, daß es bei einer motorischen Verstellung des Verschlußelements 1 impulsartige Sensorsignale erzeugt, die innerhalb eines Impulses vorzugsweise eine ansteigende und eine absteigende Signalflanke aufweisen. Solche Signalflanken lassen sich steuerungstechnisch gut verarbeiten. Bei den Sensorsignalen kann es sich insoweit um sinusförmige, dreieckförmige, sägezahnförmige o. dgl. Signale handeln. Entsprechend weit ist der Begriff "Signalflanke" vorliegend zu verstehen. Besonders vorteilhaft ist es in diesem Zusammenhang, wenn die Sensorsignale rechteckförmig verlaufen und nur einen Maximalpegel und einen Minimalpegel annehmen können.

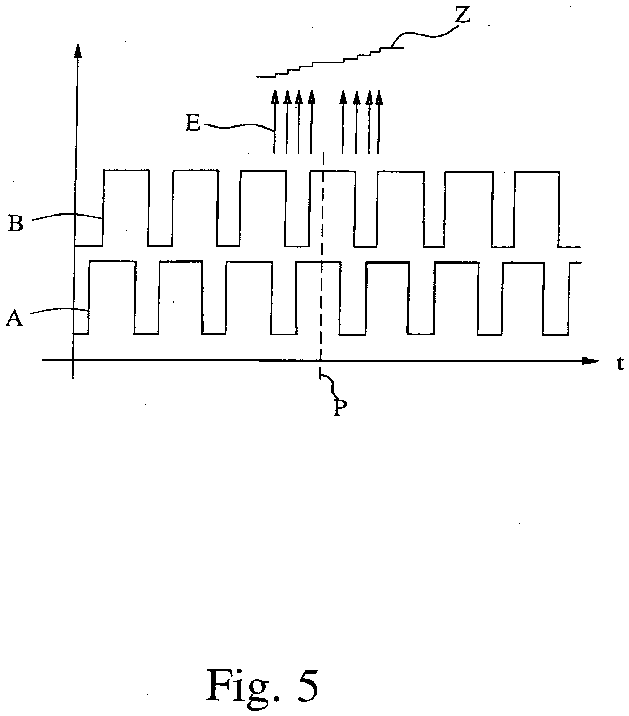

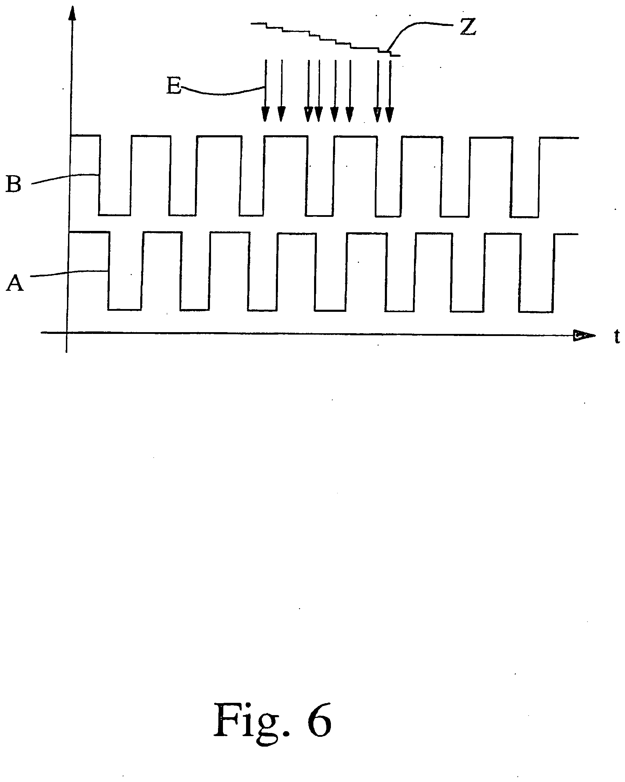

Fig. 5 zeigt die Signalverläufe der Sensorelemente A, B beim Aufwärtslauf. Fig. 6 zeigt die Signalverläufe der Sensorelemente A, B beim Abwärtslauf. Es läßt sich diesen Darstellungen entnehmen, daß die Signalverläufe der Sensorelemente A, B im wesentlichen rechteckförmig sind.

Es sind zahlreiche vorteilhafte Varianten von Sensorelementen A, B denkbar, um die benötigten Signalverläufe zu erzeugen. Vorzugsweise ist das jeweilige Sensorelement A, B als Näherungssensor bzw. als Näherungsschalter ausgestaltet. Eine bevorzugte Variante besteht wie schon erläutert darin, daß die Sensorelemente A, B als magnetisch aktivierbare Sensoren, vorzugsweise als Reed-Sensoren oder als Hall-Sensoren ausgestaltet ist. Bei einer anderen bevorzugten Variante sind die Sensorelemente A, B als kapazitive oder induktive Sensoren ausgestaltet. Eine dritte bevorzugte Variante sieht vor, daß die Sensorelemente A, B als optische Sensoren ausgestaltet sind. Dies gilt natürlich auch, wenn nur ein Sensorelement A vorgesehen sein sollte.

Je nach Ausgestaltung der Sensoreinrichtung 5 kann es notwendig sein, daß der Sensoreinrichtung 5 eine Auslöseelementanordnung 5a mit mindestens einem Auslöseelement M, vorzugsweise mit mindestens einem Magneten M, zugeordnet ist. Dies ist beispielsweise bei als Reed-Sensor oder als Hall-Sensor ausgestalteten Sensorelementen A, B der Fall und in Fig. 4 dargestellt. Eine Verstellung des Verschlußelements 1 löst hier eine Bewegung der Auslöseelementanordnung 5a relativ zu der Sensoreinrichtung 5, hier zu einem Umlaufen der Magnete M, und damit die Erzeugung der periodischen Sensorsignale aus. Die konstruktive Ausgestaltung wird weiter unten erläutert.

Für die Definition der Zählereignisse bestehen zahlreiche Möglichkeiten. Im einfachsten Fall ist es so, daß die ansteigenden Signalflanken und/oder die abfallenden Signalflanken der Sensorsignale jeweils ein Zählereignis für den Positionszähler bilden. Es ist auch denkbar, daß ein Zählereignis durch das Ergebnis einer logischen Verknüpfung zwischen den Sensorsignalen eines Sensorelements A und den Sensorsignalen eines anderen Sensorelements B definiert wird.

Bei dem in Fig. 5 dargestellten Ausführungsbeispiel ist es vorgesehen, daß die abfallenden und ansteigenden Signalflanken sowohl des Sensorelements A als auch des Sensorelements B jeweils ein Zählereignis E bilden. In einem mittleren Verstellbereich des Verschlußelements 1 sind die resultierenden Zählereignisse E und der jeweils resultierende Zählerstand Z beispielhaft dargestellt.

Die Darstellung des Zählerstandes Z bildet eine Treppenform, deren Stufenbreite nicht konstant ist, was auf unterschiedliche Zeitabstände zwischen zwei Zählereignissen zurückzuführen ist. Die Ursache hierfür besteht darin, daß die von den Sensorelementen A, B gebildeten Rechteckimpulse nicht ideal symmetrisch ausgestaltet sind. Dies liegt wiederum daran, daß die beiden Sensorelemente A, B nicht genau im Zentrum der Bewegung der umlaufenden Magnete M angeordnet sind. Diese Anordnung ist aber gewählt worden, um eine noch zu erläuternde Phasenverschiebung zwischen den Sensorsignalen herzustellen.

Mit der vorschlagsgemäßen Lösung sind die unterschiedlichen zeitlichen Abstände zwischen zwei aufeinanderfolgenden Zählereignissen aber auch kein Problem, da mit der Messung des Zeitabstands ohne weiteres auch zeitliche Abstände unterschiedlicher Länge überbrückt werden können.

Bei jedem Zählereignis ist eine Entscheidung darüber zu treffen, ob hoch- oder heruntergezählt werden soll. Es muß also erkannt werden, ob sich das Verschlußelement 1 aktuell in die eine Richtung oder in die andere Richtung bewegt.

Im einfachsten Fall wird die in der Antriebssteuerung 4 ohnehin vorliegende Information über die Verstellrichtung genutzt, um eine Entscheidung über die Zählrichtung zu treffen. Hier ist es so, daß das von einer Signalflanke des jeweiligen Sensorelements A, B gebildete Zählereignis in Abhängigkeit von dem Zustand eines die Verstellrichtung abbildenden Steuerausgangs der Antriebssteuerung 4 ein Hochzählen oder Herunterzählen um einen Zählschritt bewirkt. Dabei ist der Begriff "Steuerausgang" weit zu verstehen. Beispielsweise kann dieser Steuerausgang ein Signal bereitstellen, das auf die Betätigung eines Richtungsschalters durch den Benutzer zurückgeht. Es kann sich aber auch um den Ausgang eines Speichers handeln, in dem die aktuelle Richtungsinformation abgelegt ist.

Die obige bevorzugte Variante zur Erkennung der Verstellrichtung ist einfach und kostengünstig realisierbar. Dies nicht zuletzt dadurch, daß nur ein einziges Sensorelement benötigt wird. Nachteilig ist allerdings die Tatsache, daß die Richtung einer bei abgeschaltetem Antriebsmotor 2 erfolgten Verstellung des Verschlußelements 1 nicht unmittelbar erkennbar ist.

Anders ist dies bei der in Fig. 4 dargestellten Sensoreinrichtung 5, die zwei Sensorelemente A, B umfaßt. Hier kann das zusätzliche Sensorelement B nämlich der Erkennung der aktuellen Verstellrichtung dienen, so daß die Verstellrichtung ohne Rückgriff auf die Antriebssteuerung 4 im übrigen ermittelbar ist.

Für die Ermittlung der Verstellrichtung ist es erforderlich, daß die Sensorsignale der beiden Sensorelemente A, B bei einer Verstellung des Verschlußelements 1 zueinander phasenverschoben sind. Dies ist aufgrund der erläuterten Anordnung der Sensorelemente A, B der Fall und läßt sich der Darstellung in den Fig. 5 und 6 entnehmen.

Die Sensorsignale der beiden Sensorelemente A, B sind vorzugsweise um etwa 25% einer Signalperiode zueinander phasenverschoben. Durch eine solche Phasenverschiebung läßt sich bei geeigneter Impulsbreite aus einer ein Zählereignis bildenden Signalflanke des Sensorelements A und dem korrespondierenden Signalwert der Sensorelements B die Zählrichtung bestimmen.

Hier und vorzugsweise ist es so, daß beim Aufwärtslauf (Fig. 5) eine ansteigende Signalflanke des Sensorelements A stets zu einem Minimalpegel des Sensorelements B korrespondiert und daß eine absteigende Signalflanke des Sensorelements A stets zu einem Maximalpegel des Sensorelements B korrespondiert. Beim Abwärtslauf (Fig. 6) ist es dagegen so, daß eine ansteigende Signalflanke des Sensorelements A stets zu einem Maximalpegel des Sensorelements B korrespondiert und daß eine absteigende Signalflanke des Sensorelements A stets zu einem Minimalpegel des Sensorelements B korrespondiert.

Es läßt sich durch den Signalpegel des Sensorelements B also leicht erkennen, ob eine ansteigende bzw. absteigende Signalflanke des Sensorelements A, die hier und vorzugsweise ein Zählereignis E für den Positionszähler bildet, ein Hoch- oder ein Herunterzählen im Positionszähler auslösen soll.

Ganz allgemein ist es also so, daß das von einer Signalflanke des Sensorimpulses des einen Sensorelements A, B gebildete Zählereignis in Abhängigkeit von dem aktuellen Sensorsignal des anderen Sensorelements B, A im Positionszähler ein Hochzählen oder Herunterzählen um einen Zählschritt bewirkt.

Die von der Sensoreinrichtung 5 erzeugten Zählereignisse bewirken aber nicht nur einen Zählvorgang im Positionszähler. Sie dienen wie schon angedeutet auch dem Auslösen der Messung des Zeitabstands in der Zeitmeßeinrichtung.

In bevorzugter Ausgestaltung ist es vorgesehen, daß - vorzugsweise im Falle der Definition periodischer Zählereignisse - jedes einzelne Zählereignis die Messung des Zeitabstands auslöst. Grundsätzlich kann es aber vorteilhaft sein, daß nur Zählereignisse, die einem vorbestimmten Verstellbereich des Verschlußelements 1 zugeordnet sind, die Messung des Zeitabstands auslösen. Die letztgenannte Variante geht auf die Überlegung zurück, daß eine Ermittlung der genauen Position des Verschlußelements 1 nicht im gesamten Verstellbereich des Verschlußelements 1 gefordert ist. Ein millimetergenaues Anfahren einer Zwischenlage ist beispielsweise nicht notwendig.

Das Verschlußelement 1 ist vorzugsweise zwischen einer unteren Endlage und einer oberen Endlage verstellbar, wobei den beiden Endlagen ein unterer Zählerstand und ein unterer Zeitabstand bzw. ein oberer Zählerstand und ein oberer Zeitabstand zugeordnet sind. Mit der obigen Überlegung kann es vorteilhaft sein, daß ausschließlich das der unteren Endlage und/oder das der oberen Endlage zugeordnete Zählereignis die Messung des Zeitabstands auslöst bzw. auslösen.

In erster Linie dient die obige Ermittlung der Position des Verschlußelements 1 dem automatischen Betrieb des Verschlußelements 1 mit entsprechend automatischer Abschaltung des Antriebsmotors 2. Hierfür ist es vorzugsweise vorgesehen, daß die Antriebssteuerung 4 einen Positionsspeicher zur Speicherung der Position des Verschlußelements 1 in Endlagen und/oder in Zwischenlagen aufweist und daß im Positionsspeicher ein Zählerstand ggf. mit einem Zeitabstand speicherbar ist. Ob der Zeitabstand mit abgespeichert wird, hängt davon ab, mit welcher Genauigkeit die jeweiligen Lagen angefahren werden sollen. Um Speicherplatz zu sparen kann es beispielsweise vorgesehen sein, daß der Zeitabstand nur bei der Speicherung der Endlagen, und nicht bei der Speicherung von Zwischenlagen mit abgespeichert wird.

Der Positionsspeicher wird vorzugsweise im Teach-In-Verfahren mit Daten gefüllt. Dabei wird eine gewünschte Position des Verschlußelements 1 über entsprechende Eingabetasten manuell angefahren. Bei Erreichen der gewünschten Position werden die entsprechenden Werte von Zählerstand und/oder Zeitabstand in den Positionsspeicher übertragen.

Beim Anfahren einer im Positionsspeicher gespeicherten End- und/oder Zwischenlage vergleicht die Antriebssteuerung 4 den aktuellen Zählerstand mit dem gespeicherten Zählerstand und schaltet bei Übereinstimmung den Antriebsmotor 2 vorbehaltlich einer ggf. vorgesehenen Überprüfung des Zeitabstands ab. Insbesondere beim Anfahren einer Endlage, vorzugsweise ausschließlich beim Anfahren einer Endlage, ist es nämlich vorgesehen, daß die Antriebssteuerung 4 den Antriebsmotor 2 erst abschaltet, wenn zusätzlich der aktuelle Zeitabstand mit dem gespeicherten Zeitabstand übereinstimmt.

Bei dem oben erläuterten Anfahren einer im Positionsspeicher gespeicherten End- und/oder Zwischenlage mit Vergleich des Zeitabstands kann vorteilhaft auch ein Bremsweg eingerechnet werden. Dies bedeutet, daß der Antriebsmotor 2 kurz vor dem Erreichen des gespeicherten Zeitabstands abgeschaltet wird. Dies kann zu einer erheblichen Erhöhung der Positioniergenauigkeit führen.

Im Hinblick auf ein Wiederanfahren nach dem Abschalten des Antriebsmotors 2 oder nach einem Stromausfall ist es besonders vorteilhaft, wenn die vor dem Abschalten geltenden Positionsdaten beim Wiederanfahren vorliegen. Damit läßt sich erkennen, ob sich das Verschlußelement 1 im abgeschalteten Zustand, beispielsweise durch ein Absacken des Rolladens o. dgl., ungewollt verstellt hat. Hierfür ist es vorzugsweise vorgesehen, daß die Antriebssteuerung 4 einen Zwischenspeicher aufweist und stets bzw. zyklisch den jeweils aktuellen Zählerstand und ggf. den aktuellen Zeitabstand speichert. Ferner kann es weiter vorzugsweise vorgesehen sein, daß der Zwischenspeicher zusätzlich das aktuelle Sensorsignal bzw. die aktuellen Sensorsignale der Sensoreinrichtung 5 speichert. Der Zwischenspeicher kann hardwaremäßig auch mit dem Positionsspeicher zusammenfallen.

Bei geeigneter Auslegung des Zwischenspeichers ist es möglich, daß die Antriebssteuerung 4 bei einem Wiederanfahren des Antriebsmotors 2 nach einer Abschaltung oder nach einem Stromausfall das aktuelle Sensorsignal bzw. die aktuellen Sensorsignale der Sensoreinrichtung 5 mit dem im Zwischenspeicher gespeicherten Sensorsignal bzw. mit den im Zwischenspeicher gespeicherten Sensorsignalen vergleicht und bei einer Abweichung aufgrund einer Verstellung während des abgeschalteten Zustands eine Korrekturroutine zur ggf. erforderlichen Korrektur des Zählerstandes auslöst.

Mit dem Zwischenspeicher kann also leicht erfaßt werden, daß im abgeschalteten Zustand eine Verstellung des Verschlußelements 1 erfolgt ist, die eine Korrektur des Zählerstandes erfordert. Anschließend ist zu ermitteln, in welcher Richtung die Korrektur vorgenommen werden muß.

Hierfür ist es vorzugsweise vorgesehen, daß die Antriebssteuerung 4 in der Korrekturroutine das aktuelle Sensorsignal bzw. die aktuellen Sensorsignale ggf. als Signalfolge zusammen mit dem im Zwischenspeicher gespeicherten Sensorsignal bzw. mit den im Zwischenspeicher gespeicherten Sensorsignalen auf das Auftreten eines Zählereignisses überprüft und entsprechend im Zähler ein Hoch- bzw. Herunterzählen um einen Zählschritt nachholt. Dabei wird unterstellt, daß die im Zwischenspeicher vorliegenden Werte für die Sensorsignale den aktuellen Sensorsignalen unmittelbar vorausgehen und entsprechend eine Signalfolge mit den aktuellen Sensorsignalen bilden.

In Fig. 5 ist eine Position P durch eine gestrichelte Linie dargestellt. Bleibt der Antriebsmotor 2 in dieser Position durch einen Stromausfall stehen, so liegen vorzugsweise beim Wiederanfahren der Zählerstand, ggf. der Zeitabstand und die Signalwerte der Sensorelemente A, B für die Position P im Zwischenspeicher vor. In diesem Beispielfall ist für das Sensorelement A der Maximalpegel und für das Sensorelement B ebenfalls der Maximalpegel gespeichert. Ist nun das Verschlußelement 1 aufgrund seines Gewichts während des Stromausfalls geringfügig abgesackt, so werden beim Wiederanfahren für das Sensorelement A unverändert der Maximalpegel, für das Sensorelement B allerdings nunmehr der Minimalpegel gemessen.

Unterstellend, daß den aktuellen Sensorsignalen der Sensorelemente A, B die im Zwischenspeicher gespeicherten Sensorsignale unmittelbar vorausgegangen sind, läßt sich eine abfallende Signalflanke beim Sensorelement B bei korrespondierendem Maximalpegel des Sensorelements A ermitteln, was einem Zählereignis für das Herunterzählen im Positionszähler entspricht (Fig. 6). Entsprechend wird das Herunterzählen nachgeholt, bevor der Verstellbetrieb wieder aufgenommen wird. Hier wird deutlich, daß die Realisierung der Sensoreinrichtung 5 mit zwei Sensorelementen A, B mit besonderen Vorteilen beim Wiederanfahren verbunden ist.

Es darf an dieser Stelle darauf hingewiesen werden, daß die Realisierung der Sensoreinrichtung 5 mit zwei Sensorelementen A, B hinsichtlich der Fehlerrobustheit besondere Vorteile mit sich bringt. Fehler können beispielsweise dadurch entstehen, daß ein mechanischer Stoß von außen einen zusätzlichen, unerwünschten Signalimpuls - Signalpeak - erzeugt, der eine ansteigende und eine absteigende Signalflanke aufweist. Entsprechend wird dieser Signalpeak von der Antriebssteuerung 4 als zwei aufeinanderfolgende Zählereignisse erfaßt. Angesichts der in der Regel sehr kurzen Zeitdauer des Signalpeaks führen die resultierenden Zählereignisse nur zu einem Hoch- bzw. Herunterzählen, das anschließend durch ein Herunter- bzw. Hochzählen kompensiert wird. Letztlich hat ein solcher Signalpeak keine Auswirkungen zumindest auf den Zählerstand im Positionszähler.

Bei einer Sensoreinrichtung 5 mit nur einem Sensorelement A läßt sich der Zählerstand beim Wideranfahren nach einer bevorzugten Ausgestaltung immerhin mit einiger Wahrscheinlichkeit in der richtigen Richtung nachholen. Dabei ist es zunächst vorgesehen, daß jedes Zählereignis, das durch eine abfallende und ansteigende Flanke des - einzigen - Sensorsignals gebildet wird, die Messung des Zeitabstands in der Zeitmeßeinrichtung auslöst. Ferner wird neben dem Zählerstand und dem Sensorsignal auch der Zeitabstand im Zwischenspeicher sowie die letzte Verstellrichtung gespeichert.

Wird nun durch die Antriebssteuerung 4 festgestellt, daß sich das Sensorsignal im abgeschalteten Zustand verändert hat, so startet die Antriebssteuerung 4 wieder eine Korrekturroutine. In der Korrekturroutine wird anhand des im Zwischenspeicher vorliegenden Zeitabstands ermittelt, ob sich die Anordnung vor dem Abschalten näher dem nächsten Zählereignis oder näher dem letzten Zählereignis befindet. Es wird nun unterstellt, daß während des abgeschalteten Zustands eine Verstellung in Richtung des nächstliegenden Zählereignisses erfolgt ist und ein entsprechender Zählvorgang im Positionszähler nachgeholt. Dies führt mit einiger Wahrscheinlichkeit zu dem richtigen Ergebnis, sofern die Zählereignisse über die Verstellung des Verschlußelements 1 gesehen hinreichend weit voneinander entfernt sind.

Die oben erläuterte Messung des Zeitabstands hat ganz allgemein noch einen weiteren Vorteil. Sie kann nämlich zusätzlich herangezogen werden, um ein ggf. unerwünschtes Abbremsen oder Anhalten des Verschlußelements 1 zu erkennen. Ein solches Abbremsen bzw. Anhalten des Verschlußelements 1 kann beispielsweise im Einklemmfall auftreten. Ein weiterer, hier relevanter Fall wird weiter unten im Zusammenhang mit der Realisierung eines Freilaufs im Antriebsstrang zwischen Antriebsmotor 2 und Verschlußelement 1 erläutert.

Um nun das Abbremsen bzw. Anhalten des Verschlußelements 1 zu erkennen, ist es vorzugsweise vorgesehen, daß die Antriebssteuerung 4 das Überschreiten eines Grenz-Zeitabstands erfaßt und den Antriebsmotor 2 dann abschaltet. Dabei ist es im einfachsten Fall vorgesehen, daß der Grenz-Zeitabstand ein konstanter Wert ist, der vorzugsweise in einem Speicher abgelegt ist. Grundsätzlich ist es aber auch denkbar, daß der Grenz-Zeitabstand von der aktuellen Verstellrichtung und/oder von dem aktuellen Verstellbereich und/oder von der aktuellen Verstellgeschwindigkeit abhängt. Hierfür können entsprechend mehrere Grenz-Zeitabstände in einem Speicher abgelegt sein. Weiter kann es auch vorgesehen sein, daß die Antriebssteuerung 4 den Grenz-Zeitabstand ständig oder zu vorbestimmten Zeitpunkten jeweils neu ermittelt.

Es wurde bereits darauf hingewiesen, daß das Verschlußelement 1 als Rolladen, als Rolltor, als Markise o. dgl. ausgestaltet sein kann. Hier ist das Verschlußelement 1 mittels der Antriebsanordnung vorzugsweise auf eine Wickelwelle 6 aufwickelbar.

Für die konstruktive Ausgestaltung der Antriebsanordnung sind zahlreiche Varianten denkbar. Ein Beispiel ist die Ausgestaltung als Gurtwickler für einen Rolladen. Bei der in der Zeichnung dargestellten und insoweit bevorzugten Ausgestaltung ist die Antriebsanordnung als Rohrmotor mit einem rohrförmigen Gehäuse 7 ausgestaltet, wobei der Rohrmotor im montierten Zustand in der Wickelwelle 6 angeordnet, insbesondere in die Wickelwelle 6 eingeschoben ist.

Der Rohrmotor weist vorzugsweise einerends einen Rohrmotorkopf 8 für den Anschluß mit einem ortsfesten Gegenlager und anderenends einen Mitnehmer 9 für die antriebstechnische Kopplung mit der Wickelwelle 6 auf. Dabei ist der Rohrmotor weiter vorzugsweise im Bereich des Rohrmotorkopfes 8 mit einem Adapterring 10 ausgestattet, der gegenüber dem Rohrmotor im übrigen verdrehbar ist und über den die Wickelwelle 6 im montierten Zustand gegenüber dem Rohrmotor verdrehbar gelagert ist.

Die Sensoreinrichtung 5 ist in bevorzugter Ausgestaltung einer Komponente im Antriebsstrang zwischen dem Antriebsmotor 2 und dem Verschlußelement 1 zugeordnet. Bei dem dargestellten Ausführungsbeispiel ist die Sensoreinrichtung 5 der Wickelwelle 6 zugeordnet. Hierfür ist dem oben geschriebenen Adapterring 10 ein Ring 11 - Magnetring 11 - zugeordnet, der mit dem Adapterring 10 gekoppelt ist und bei einer Drehung des Adapterrings 10 mitbewegt wird (Fig. 3). Dem Magnetring 11 ist hier und vorzugsweise die Auslöseelementanordnung 5a zugeordnet. Im einzelnen sind im Magnetring 11 die als Magnete M ausgebildeten Auslöseelemente angeordnet, und zwar über den Umfang des Magnetrings 11 verteilt. Grundsätzlich kann die Auslöseelementanordnung 5a auch an oder im Adapterring 10 angeordnet sein. Alle Ausführungen zum Magnetring 11 gelten für diesen Fall entsprechend für den Adapterring 10.

Die Sensoreinrichtung 5, insbesondere die Sensorelemente A, B, sind von dem Magnetring 11 im wesentlichen umschlossen, so daß die Magnete M optimal mit der Sensoreinrichtung 5 zusammenwirken.

Die Sensorelemente A, B der in Fig. 4 dargestellten Sensoreinrichtung 5 sind im wesentlichen in einer Mittelebene des Magnetrings 11 angeordnet, wobei die Achse des Magnetrings 11 in dieser Mittelebene liegt. In besonders bevorzugter Ausgestaltung ist es allerdings vorgesehen, daß die Sensorelemente A, B versetzt zu der Mittelebene, vorzugsweise in einer Ebene, die zu der Mittelebene versetzt ist, angeordnet sind. Damit läßt sich erreichen, daß die Magnete M jeweils näher an dem jeweiligen Sensorelement A, B vorbeilaufen.

Der Magnetring 11 ist in Fig. 4 schematisch dargestellt. Er ist über seinen Umfang mit den schon erläuterten, den Sensorelementen A, B zugeordneten Magneten M ausgestattet. Hier und vorzugsweise sind vier Magnete M vorgesehen. In besonders bevorzugter Ausführungsform sind zwei Magnete M vorgesehen. Vorteilhafterweise sind die Magnete M gleichmäßig über den Umfang des Magnetrings 11 verteilt. Grundsätzlich ist es aber auch denkbar, daß eine ungleichmäßige Verteilung über den Umfang des Magnetrings 11 vorgesehen ist.

Als weiter vorteilhaft hat sich erwiesen, die Magnete M so anzuordnen, daß der eine Pol eines Magneten M radial innen und der andere Pol dieses Magneten M radial außen liegt. Dabei sollten nebeneinander liegende Magnete M, insbesondere gegenüberliegende Magnete M, gegenläufig gepolt sein. Dies bedeutet, daß bei einem Magnet M der Nordpol radial innen und der Südpol radial außen und bei dem jeweils gegenüberliegenden Magnet M der Nordpol radial außen und der Südpol radial innen liegt.

Interessant ist bei der in Fig. 3 dargestellten Anordnung schließlich noch, daß die Sensorelemente A, B auf der gleichen Platine angeordnet sind, wie die Antriebssteuerung 4 im übrigen. Die führt zu einem montagefreundlichen Aufbau.

Schließlich darf noch auf eine bevorzugte, nicht dargestellte Variante hingewiesen werden, bei der der Antriebsmotor 2 mit dem Mitnehmer 9 über einen Freilauf antriebstechnisch gekoppelt ist. Bei diesem Freilauf handelt es sich vorzugsweise um einen beidseitig begrenzten Freilauf, der weiter vorzugsweise eine Drehung des Mitnehmers 9 um etwa 30° ermöglicht, ohne daß die Antriebswelle des Antriebsmotors 2 mitdreht.

Die Realisierung des obigen Freilaufs hat insbesondere beim Abwärtslauf eines als Rolladen ausgestalteten Verschlußelements 1 besondere Vorteile. Beim Auftreffen auf ein Hindernis oder beim Erreichen der unteren Endlage wird die Verstellung des Rolladens 1 blockiert, wodurch anschließend der Freilauf durchlaufen wird. Während des Durchlaufens des Freilaufs werden durch den Stillstand des Rolladens 1 keine weiteren Zählereignisse erzeugt, so daß bei entsprechender Ausgestaltung der Zeitabstand immer weiter steigt. Nach dem Überschreiten eines oben erläuterten Grenz-Zeitabstands schaltet die Antriebssteuerung 4 schließlich den Antriebsmotor 2 ab.

Die Anordnung mit einem Freilauf in Verbindung mit der Überwachung des Zeitabstandes auf das Überschreiten eines Grenz-Zeitabstands ist also ganz allgemein, insbesondere jedoch bei einem als Rolladen ausgestalteten Verschlußelement 1, vorteilhaft. Sowohl beim Aufwärtslauf als auch beim Abwärtslauf des Rolladens 1 o. dgl. führt eine durch das Erreichen einer Endlage, durch einen Einklemmfall o. dgl. bewirkte Reduzierung der Verstellgeschwindigkeit des Verschlußelements 1 zum Überschreiten des Grenz-Zeitabstands und damit zum Abschalten des Antriebsmotors 2. Dies ist beim Abwärtslauf vorteilhafterweise mit einem Durchlaufen des Freilaufs verbunden. Dadurch wirken beim Auflaufen des Verschlußelements 1 beispielsweise auf ein Hindernis oder einen Anschlag nur geringe Kräfte auf das Hindernis oder den Anschlag.

Schließlich darf noch darauf hingewiesen werden, daß die vorschlagsgemäße Antriebsanordnung grundsätzlich auch als Gurtwickler für eine Verdunkelungsvorrichtung wie einen Rolladen ausgestaltet sein kann. Hinsichtlich des grundsätzlichen Aufbaus eines solchen Gurtwicklers darf auf die DE 299 21 653 U1 verwiesen werden, die auf die Anmelderin zurückgeht und die hiermit in vollem Umfange zum Gegenstand dieser Anmeldung gemacht wird. Der Gurtwickler ist mit einem Gehäuse und darin befindlich einer Haspel zum Aufwickeln eines Gurtbandes ausgestattet, wobei die Haspel mit einem Antriebsmotor antriebstechnisch gekoppelt ist. Wesentlich ist bei der Ausgestaltung des Gurtwicklers, daß das Auslöseelement (M), insbesondere ein Magnet (M) der Auslöseelementanordnung, an der Haspel angeordnet ist. Besonders vorteilhaft ist bei einer solchen Anordnung die Tatsache, daß die Wegmeßanordnung einen irgendwie gearteten, zusätzlichen Sensor nicht erfordert. Dies ist gerade bei den sehr kompakt bauenden Gurtwicklern von besonderer Bedeutung.

## Patentansprüche

1. Antriebsanordnung für eine Verdunkelungsvorrichtung bzw. Sicherungsvorrichtung mit einem verstellbaren Verschlußelement (1) wie einem Rolladen o. dgl., wobei ein Antriebsmotor (2) und ggf. ein dem Antriebsmotor (2) nachgeschaltetes Getriebe (3) zur motorischen Verstellung des Verschlußelements (1) vorgesehen ist, wobei dem Antriebsmotor (2) eine Antriebssteuerung (4) zugeordnet ist und wobei die Antriebssteuerung (4) eine Wegmeßanordnung zur Ermittlung der Position des Verschlußelements (1) aufweist, wobei die Wegmeßanordnung zur Ermittlung der Grobposition eine Sensoreinrichtung (5) und einen Positionszähler aufweist, wobei die Sensoreinrichtung (5) bei einer motorischen Verstellung des Verschlußelements (1) periodische Sensorsignale erzeugt, die vorzugsweise periodische Zählereignisse für den Positionszähler bereitstellen und wobei das Auftreten eines Zählereignisses im Positionszähler je nach Verstellrichtung ein Hoch- bzw. Herunterzählen um einen Zählschritt bewirkt, wobei die Wegmeßanordnung zur Ermittlung der Feinposition eine Zeitmeßeinrichtung aufweist, mit der, ausgelöst durch ein Zählereignis, der aktuelle zeitliche Abstand - Zeitabstand - zu diesem Zählereignis meßbar ist, wobei die Antriebssteuerung (4) einen Zwischenspeicher aufweist und stets bzw. zyklisch den jeweils aktuellen Zählerstand und ggf. den aktuellen Zeitabstand speichert,
**dadurch gekennzeichnet,**
**daß** der Zwischenspeicher zusätzlich das aktuelle Sensorsignal bzw. die aktuellen Sensorsignale der Sensoreinrichtung (5) speichert und daß die Anordnung so getroffen ist, daß die Antriebssteuerung (4) bei einem Wiederanfahren des Antriebsmotors (2) nach einer Abschaltung oder nach einem Stromausfall das aktuelle Sensorsignal bzw. die aktuellen Sensorsignale der Sensoreinrichtung (5) mit dem im Zwischenspeicher gespeicherten Sensorsignal bzw. mit den im Zwischenspeicher gespeicherten Sensorsignalen vergleicht und bei einer Abweichung aufgrund einer Verstellung während des abgeschalteten Zustands eine Korrekturroutine zur ggf. erforderlichen Korrektur des Zählerstandes auslöst.

2. Antriebsanordnung nach Anspruch 1, **dadurch gekennzeichnet, daß** die Sensoreinrichtung (5) mindestens ein Sensorelement (A, B) umfaßt, daß das Sensorelement (A, B) bei einer motorischen Verstellung des Verschlußelements (1) impulsartige Sensorsignale erzeugt, die innerhalb eines Impulses vorzugsweise eine ansteigende und eine absteigende Signalflanke aufweisen, weiter vorzugsweise, daß die Sensorsignale rechteckförmig verlaufen.

3. Antriebsanordnung nach Anspruch 1 oder 2, **dadurch gekennzeichnet, daß** das Sensorelement (A, B) als magnetisch aktivierbarer Sensor, vorzugsweise als Reed-Sensor oder als Hall-Sensor ausgestaltet ist, oder, daß das Sensorelement (A, B) als kapazitiver oder induktiver Sensor ausgestaltet ist, oder, daß das Sensorelement (A, B) als optischer Sensor ausgestaltet ist.

4. Antriebsanordnung nach einem der vorhergehenden Ansprüche, **dadurch gekennzeichnet, daß** der Sensoreinrichtung (5) eine Auslöseelementanordnung (5a) mit mindestens einem Auslöseelement (M), vorzugsweise mit mindestens einem Magneten (M), zugeordnet ist und daß eine Verstellung des Verschlußelements (1) eine Bewegung der Auslöseelementanordnung (5a) relativ zu der Sensoreinrichtung (5) und damit die Erzeugung der periodischen Sensorsignale auslöst.

5. Antriebsanordnung nach Anspruch 2 und ggf. nach Anspruch 3 oder 4, **dadurch gekennzeichnet, daß** die Anordnung so getroffen ist, daß die ansteigenden Signalflanken und/oder die absteigenden Signalflanken der Sensorsignale jeweils ein Zählereignis für den Positi-onszähler bilden.

6. Antriebsanordnung nach Anspruch 2 und ggf. nach einem der Ansprüche 3 bis 5, **dadurch gekennzeichnet, daß** die Anordnung so getroffen ist, daß das von den Sensorsignalen gebildete Zählereignis in Abhängigkeit von dem Zustand eines die Verstellrichtung abbildenden Steuerausgangs der Antriebssteuerung 4 im Positionszähler ein Hochzählen oder Herunterzählen um einen Zählschritt bewirkt.

7. Antriebsanordnung nach einem der vorhergehenden Ansprüche, **dadurch gekennzeichnet, daß** die Sensoreinrichtung (5) zwei Sensorelemente (A, B) umfaßt und daß die Sensorsignale der beiden Sensorelemente (A, B) bei einer Verstellung des Verschlußelements (1) zueinander phasenverschoben sind, vorzugsweise, daß das von einer Signalflanke eines Sensorimpulses des einen Sensorelements (A, B) gebildete Zählereignis in Abhängigkeit von dem aktuellen Sensorsignal des anderen Sensorelements (B, A) im Positionszähler ein Hochzählen oder Herunterzählen um einen Zählschritt bewirkt.

8. Antriebsanordnung nach einem der vorhergehenden Ansprüche, **dadurch gekennzeichnet, daß** die Antriebssteuerung (4) zur Speicherung der Position des Verschlußelements (1) in Endlagen und/oder in Zwischenlagen einen Positionsspeicher aufweist und daß im Positionsspeicher ein Zählerstand ggf. mit einem Zeitabstand speicherbar ist.

9. Antriebsanordnung nach Anspruch 8, **dadurch gekennzeichnet, daß** die Anordnung so getroffen ist, daß die Antriebssteuerung (4) beim Anfahren einer im Positionsspeicher gespeicherten End- und/oder Zwischenlage den aktuellen Zählerstand mit dem gespeicherten Zählerstand vergleicht und bei Übereinstimmung den Antriebsmotor (2) vorbehaltlich einer ggf. vorgesehenen Überprüfung des Zeitabstandes abschaltet, vorzugsweise, daß insbesondere beim Anfahren einer Endlage, die Antriebssteuerung (4) den Antriebsmotor (2) erst abschaltet, wenn zusätzlich der aktuelle Zeitabstand mit dem gespeicherten Zeitabstand übereinstimmt.

10. Antriebsanordnung nach einem der vorhergehenden Ansprüche, **dadurch gekennzeichnet, daß** die Anordnung so getroffen ist, daß die Antriebssteuerung (4) in der Korrekturroutine das aktuelle Sensorsignal bzw. die aktuellen Sensorsignale ggf. als Signalfolge zusammen mit dem im Zwischenspeicher gespeicherten Sensorsignal bzw. mit den im Zwischenspeicher gespeicherten Sensorsignalen auf das Auftreten eines Zählereignisses überprüft und entsprechend im Positi-onszähler ein Hoch- bzw. Herunterzählen um einen Zählschritt nachholt.

## Claims

1. Drive arrangement for a shading apparatus or security apparatus having an adjustable closure element (1) such as a roller shutter or the like, wherein a drive motor (2) and possibly a gear mechanism (3), which is connected downstream of the drive motor (2), are provided for motorized adjustment of the closure element (1), wherein a drive control means (4) is associated with the drive motor (2), and wherein the drive control means (4) has a travel-measuring arrangement for determining the position of the closure element (1), wherein the travel-measuring arrangement has a sensor device (5) and a position counter for determining the coarse position, wherein the sensor device (5), during motorized adjustment of the closure element (1), generates periodic sensor signals which preferably provide periodic counting events for the position counter, and wherein the occurrence of a counting event in the position counter produces an increment or decrement by one counting step depending on the adjustment direction, wherein the travel-measuring arrangement has a time-measuring device for determining the fine position, it being possible to use the time-measuring device, triggered by a counting event, to measure the current interval of time - time interval - to this counting event, wherein the drive control means (4) has a buffer memory and always or cyclically stores the respectively current counter reading and possibly the current time interval,
**characterized**
**in that** the buffer memory additionally stores the current sensor signal or the current sensor signals from the sensor device (5), and in that the arrangement is made such that the drive control means (4), when the drive motor (2) is restarted after being turned off or after a power cut, compares the current sensor signal or the current sensor signals from the sensor device (5) with the sensor signal which is stored in the buffer memory or with the sensor signals which are stored in the buffer memory and, in the event of a deviation on account of an adjustment during the turned-off state, triggers a correction routine for correction, which may be necessary, of the counter reading.

2. Drive arrangement according to Claim 1, **characterized in that** the sensor device (5) comprises at least one sensor element (A, B), **in that** the sensor element (A, B) generates pulse-like sensor signals in the event of motorized adjustment of the closure element (1), said pulse-like sensor signals, within one pulse, preferably having a rising and a falling signal flank, further preferably **in that** the sensor signals have a square-wave profile.

3. Drive arrangement according to Claim 1 or 2, **characterized in that** the sensor element (A, B) is designed as a sensor which can be magnetically activated, preferably as a Reed sensor or as a Hall sensor, or **in that** the sensor element (A, B) is designed as a capacitive or inductive sensor, or **in that** the sensor element (A, B) is designed as an optical sensor.

4. Drive arrangement according to one of the preceding claims, **characterized in that** a tripping element arrangement (5a) with at least one tripping element (M), preferably with at least one magnet (M), is associated with the sensor device (5), and **in that** adjustment of the closure element (1) triggers movement of the tripping element arrangement (5a) relative to the sensor device (5) and therefore the generation of the periodic sensor signals.

5. Drive arrangement according to Claim 2 and possibly according to Claim 3 or 4, **characterized in that** the arrangement is made such that the rising signal flanks and/or the falling signal flanks of the sensor signals each form a counting event for the position counter.

6. Drive arrangement according to Claim 2 and possibly according to one of Claims 3 to 5, **characterized in that** the arrangement is made such that the counting event which is formed by the sensor signals produces an increment or decrement by one counting step depending on the state of a control output, which indicates the adjustment direction, of the drive control means (4) in the position counter.

7. Drive arrangement according to one of the preceding claims, **characterized in that** the sensor device (5) comprises two sensor elements (A, B), and **in that** the sensor signals from the two sensor elements (A, B) are phase-shifted in relation to one another in the event of an adjustment of the closure element (1), preferably **in that** the counting event which is formed by a signal flank of a sensor pulse of one sensor element (A, B) produces an increment or decrement by one counting step depending on the current sensor signal from the other sensor element (B, A) in the position counter.

8. Drive arrangement according to one of the preceding claims, **characterized in that** the drive control means (4) has a position memory for storing the position of the closure element (1) in end positions and/or in intermediate positions, and **in that** a counter reading, possibly with a time interval, can be stored in the position memory.

9. Drive arrangement according to Claim 8, **characterized in that** the arrangement is made such that the drive control means (4), when approaching an end and/or intermediate position which is stored in the position memory, compares the current counter reading with the stored counter reading and, in the event of agreement, turns off the drive motor (2) subject to possible checking of the time interval, preferably **in that**, in particular when approaching an end position, the drive control means (4) only turns off the drive motor (2) when the current time interval additionally corresponds to the stored time interval.

10. Drive arrangement according to one of the preceding claims, **characterized in that** the arrangement is made such that the drive control means (4), in the correction routine, checks the current sensor signal or the current sensor signals possibly as a signal sequence together with the sensor signal which is stored in the buffer memory or with the sensor signals which are stored in the buffer memory for the occurrence of a counting event and accordingly makes up for an increment or decrement by one counting step in the position counter.

## Revendications

1. Arrangement d'entraînement pour un système d'occultation ou un système de sécurité comprenant un élément de fermeture (1) positionnable tel qu'un volet roulant ou similaire, un moteur d'entraînement (2) et éventuellement un engrenage (3) monté à la suite du moteur d'entraînement (2) étant prévus pour le positionnement motorisé de l'élément de fermeture (1), une commande d'entraînement (4) étant associée au moteur d'entraînement (2) et la commande d'entraînement (4) possédant un arrangement de mesure de course destiné à déterminer la position de l'élément de fermeture (1), l'arrangement de mesure de course possédant un dispositif de détection (5) et un compteur de positions pour la détermination de la position approximative, le dispositif de détection (5) générant des signaux de détecteur périodiques lors d'un positionnement motorisé de l'élément de fermeture (1), lesquels fournissent de préférence des événements de comptage périodiques pour le compteur de positions, et la survenue d'un événement de comptage dans le compteur de positions provoquant une incrémentation ou une décrémentation d'un pas de comptage, suivant le sens du positionnement, l'arrangement de mesure de course possédant un dispositif de mesure du temps pour la détermination de la position précise qui, lorsqu'il est déclenché par un événement de comptage, permet de mesurer l'écart dans le temps - l'intervalle de temps - actuel par rapport à cet événement de comptage, la commande d'entraînement (4) possédant une mémoire temporaire et mémorisant systématiquement ou cycliquement l'état de comptage actuel respectif et éventuellement l'intervalle de temps actuel,
**caractérisé**
**en ce que** la mémoire temporaire mémorise en plus le signal de détecteur actuel ou les signaux de détecteur actuels du dispositif de détection (5) et **en ce que** l'arrangement est affecté de telle sorte que la commande d'entraînement (4), lors d'un redémarrage du moteur d'entraînement (2) après une mise hors circuit ou après une panne électrique, compare le signal de détecteur actuel ou les signaux de détecteur actuels du dispositif de détection (5) avec le signal de détecteur mémorisé dans la mémoire temporaire ou avec les signaux de détecteur mémorisés dans la mémoire temporaire et, en présence d'un écart en raison d'un positionnement pendant l'état hors circuit, déclenche une routine de correction en vue de la correction éventuellement nécessaire de l'état de comptage.

2. Arrangement d'entraînement selon la revendication 1, **caractérisé en ce que** le dispositif de détection (5) comprend au moins un élément de détection (A, B), **en ce que** l'élément de détection (A, B), lors d'un positionnement motorisé de l'élément de fermeture (1), génère des signaux de détecteur de type impulsionnel qui présentent de préférence un front de signal montant et un front de signal descendant à l'intérieur d'une impulsion, et de préférence **en ce que** les signaux de détecteur présentent un tracé rectangulaire.

3. Arrangement d'entraînement selon la revendication 1 ou 2, **caractérisé en ce que** l'élément de détection (A, B) est configuré sous la forme d'un détecteur pouvant être activé magnétiquement, de préférence sous la forme d'un détecteur Reed ou d'un détecteur à effet Hall, ou **en ce que** l'élément de détection (A, B) est configuré sous la forme d'un détecteur capacitif ou inductif, ou **en ce que** l'élément de détection (A, B) est configuré sous la forme d'un détecteur optique.

4. Arrangement d'entraînement selon l'une des revendications précédentes, **caractérisé en ce qu'**un arrangement d'éléments de déclenchement (5a) comprenant au moins un élément de déclenchement (M), comprenant de préférence au moins un aimant (M) est associé au dispositif de détection (5) et **en ce qu'**un positionnement de l'élément de fermeture (1) déclenche un mouvement de l'arrangement d'éléments de déclenchement (5a) par rapport au dispositif de détection (5) et ainsi la génération des signaux de détecteur périodiques.

5. Arrangement d'entraînement selon la revendication 2 et éventuellement selon la revendication 3 ou 4, **caractérisé en ce que** l'arrangement est affecté de telle sorte que les fronts de signal montants et/ou les fronts de signal descendants des signaux de détecteur forment respectivement un événement de comptage pour le compteur de positions.

6. Arrangement d'entraînement selon la revendication 2 et éventuellement selon l'une des revendications 3 à 5, **caractérisé en ce que** l'arrangement est affecté de telle sorte que l'événement de comptage formé par les signaux de détecteur provoque une incrémentation ou une décrémentation d'un pas de comptage dans le compteur de positions en fonction de l'état d'une sortie de commande de la commande d'entraînement (4) qui forme le sens du positionnement.

7. Arrangement d'entraînement selon l'une des revendications précédentes, **caractérisé en ce que** le dispositif de détection (5) comprend deux éléments de détection (A, B) et **en ce que** les signaux de détecteur des deux éléments de détection (A, B) sont déphasés l'un par rapport à l'autre lors d'un positionnement de l'élément de fermeture (1), de préférence **en ce que** l'événement de comptage formé par un front de signal d'une impulsion de détecteur de l'un des éléments de détection (A, B) provoque une incrémentation ou une décrémentation d'un pas de comptage dans le compteur de positions en fonction du signal de détecteur actuel de l'autre élément de détection (B, A).

8. Arrangement d'entraînement selon l'une des revendications précédentes, **caractérisé en ce que** la commande d'entraînement (4) possède une mémoire de position destinée à mémoriser la position de l'élément de fermeture (1) dans les positions finales et/ou dans les positions intermédiaires et **en ce qu'**un état de comptage peut être mémorisé dans la mémoire de position, éventuellement avec un intervalle de temps.

9. Arrangement d'entraînement selon la revendication 8, **caractérisé en ce que** l'arrangement est affecté de telle sorte que la commande d'entraînement (4), en atteignant une position finale et/ou intermédiaire mémorisée dans la mémoire de position, compare l'état de comptage actuel avec l'état de comptage mémorisé et, en cas de concordance, met le moteur d'entraînement (2) hors circuit sous réserve d'un contrôle éventuellement prévu de l'intervalle de temps, de préférence que la commande d'entraînement (4) ne met le moteur d'entraînement (2) hors circuit, notamment en atteignant une position finale, que si, en plus, l'intervalle de temps actuel coïncide avec l'intervalle de temps mémorisé.

10. Arrangement d'entraînement selon l'une des revendications précédentes, **caractérisé en ce que** l'arrangement est affecté de telle sorte que la commande d'entraînement (4), au cours de la routine de correction, vérifie le signal de détecteur actuel ou les signaux de détecteur actuels éventuellement sous la forme d'une séquence de signaux conjointement avec le signal de détecteur mémorisé dans la mémoire temporaire ou avec les signaux de détecteur mémorisés dans la mémoire temporaire pour y déceler la survenance d'un événement de comptage et rattrape en conséquence une incrémentation ou une décrémentation d'un pas de comptage dans le compteur de positions.
